# EUROPÄISCHE PATENTSCHRIFT

(11) **EP 2 951 664 B1**
(45) Veröffentlichungstag und Bekanntmachung des Hinweises auf die Patenterteilung: **10.10.2018**
(21) Anmeldenummer: 14701285.0
(22) Anmeldetag: 18.01.2014
(51) Int. Cl.: B60K 37/06, G06F 3/0354, H01H 13/02

(54) **BEDIENEINRICHTUNG MIT OPTISCHEM FINGERNAVIGATIONSMODUL FÜR EIN LENKRAD**
OPERATING DEVICE HAVING AN OPTICAL FINGER NAVIGATION MODULE FOR A STEERING WHEEL
DISPOSITIF DE COMMANDE ÉQUIPÉ D'UN MODULE OPTIQUE DE NAVIGATION DIGITALE POUR UN VOLANT

(30) Priorität: 02.02.2013 DE 102013001876
(43) Veröffentlichungstag der Anmeldung: 09.12.2015
(73) Patentinhaber: Daimler AG, 70327 Stuttgart (DE)
(72) Erfinder: DÜNNINGER, Johannes, 97723 Wittershausen (DE); ENTENMANN, Volker, 71563 Affalterbach (DE); REISINGER, Jörg, 74369 Löchgau (DE); STEINERT, Florian, 97708 Bad Bocklet - Steinach (DE); WÜST, Joachim, 97618 Hohenroth (DE)
(74) Vertreter: JENSEN & SON
(86) Internationale Anmeldenummer: PCT/EP2014/000133
(87) Internationale Veröffentlichungsnummer: WO 2014/117918

(56) Entgegenhaltungen:
- EP-A1- 1 530 227
- EP-A1- 2 369 818
- EP-A2- 2 518 592
- WO-A1-2011/131364
- JP-A- 2012 208 762

## Beschreibung

Die vorliegende Erfindung betrifft eine Bedieneinrichtung zum Einbau in ein Lenkrad eines Kraftfahrzeugs mit einem Befestigungsrahmen und einem optischen Fingernavigationsmodul.

Aus der EP 2518592 A2 ist eine Bedieneinrichtung zum Einbau in ein Lenkrad bekannt, wobei die Bedieneinrichtung eine kreisringförmige Taste mit mehreren Segmenten zur Betätigung unterschiedlicher Schaltfunktionen aufweist. Im Innenbereich der Taste ist eine Fläche angeordnet, die mit einem Aktor zur Erzeugung haptischer Rückmeldung an einen Nutzer vorgesehen ist.

Aus der Druckschrift EP 2 369 818 A1 ist ein optisches Fingernavigationsmodul für ein Mobilfunktelefon bekannt. Es ist ringförmig von einem Leuchtbereich umgeben und besitzt einen chromartigen Ring zur besseren Orientierung für den Benutzer. In den Schalterblock eines Fahrzeuglenkrads kann ein optisches Fingernavigationsmodul (OFN) als Sensor für die Detektion von Fingerbewegungen integriert sein. Daraus gewonnene Steuersignale können beispielsweise zur Steuerung eines Anzeigemenüs im Fahrzeug verwendet werden. Vielfach ist ein derartiges OFN auch gleichzeitig als Taster oder Druckschalter ausgeführt und daher insgesamt senkrecht zur Bedienoberfläche (Schalterblende) betätigbar.

Zur besseren Orientierung ist es vorteilhaft, wenn das Fingernavigationsmodul eine Beleuchtung aufweist. Hierzu hat sich eine Ringbeleuchtung als zweckmäßig erwiesen. In einer qualitativ hochwertigen Ausführung sollte die Ringbeleuchtung homogen sein und in verschiedenen Ausführungsformen bereitstehen. Eine weitere Anforderung hinsichtlich der Praktikabilität bei der Verwendung am Fahrzeuglenkrad ist, dass das als Taster oder Schalter verwendet OFN eine mit einem Kurzhubtaster vergleichbare Betätigungshaptik besitzen sollte. Darüber hinaus ist es wünschenswert, wenn die Bedienfläche des OFN einen engtolerierten Überstand zur umgebenden Schalterblende aufweist. Außerdem sollten die Bewegungen des OFN nicht zu einem Verschleiß der Kontaktierungen des OFN zur Leiterplatte erfolgen. Weiterhin wäre es wünschenswert, wenn die Fixierung des OFN ohne Kleben erfolgen könnte.

Weitere Bedieneinrichtungen zum Einbau in ein Lenkrad eines Fahrzeugs sind aus WO 2011/131364 A1 und EP 1 530 227 A1 bekannt.

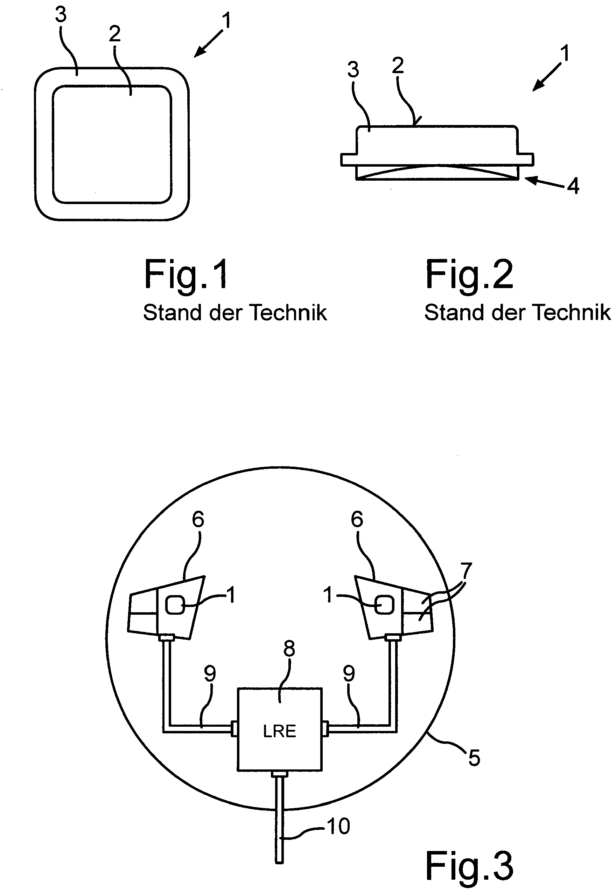

In der sogenannten "consumer electronic" werden heute OFN 1 eingesetzt, wie sie in der Draufsicht von Fig. 1 und in der Seitenansicht von Fig. 2 dargestellt sind. Ein derartiges OFN 1 besitzt beispielsweise eine quadratische Bedienfläche 2. Diese ist von einem Beleuchtungsring 3 umgeben, dessen Oberfläche bündig mit derjenigen der Bedienfläche ist. Der Beleuchtungsring 3 ist also in das OFN 1 integriert. Er wird beispielsweise mittels PVD (physical vapor deposition) aufgetragen, damit er im unbeleuchteten Zustand tagsüber wie eine Chromoberfläche wirkt. Nachts wird der Beleuchtungsring 3 beleuchtet.

Auf der Modulunterseite des OFN 1 ist eine Schnappscheibe 4 aufgeklebt. Sie dient als Tasterelement. Die Integration des Beleuchtungsrings 3 und der Schnappscheibe 4 in das OFN 1 ist durch den in der consumer electronic vorhandenen Wunsch nach minimaler Bautiefe motiviert. Diese Ausführungsform hat aber zahlreiche Nachteile, die einer Anwendung eines solchen OFN 1 in einem Fahrzeuglenkrad entgegenstehen.

Durch die geringe Bautiefe kann die integrierte Ringbeleuchtung nicht homogen ausgeführt werden, da der Abstand der beleuchtenden LED von der auszuleuchtenden Oberfläche zu gering ist. Der Helligkeitsunterschied innerhalb der Ringbeleuchtung beträgt bis zu 50 Prozent, was den Qualitätsanforderungen im Fahrzeug nicht genügt.

Durch die Integration der Beleuchtung benötigt das OFN im Ausleuchtbereich zudem eine transluzente Oberfläche, die nach aktuellem Stand der Technik noch nicht automotivtauglich ist. Beispielsweise hält diese Oberfläche den im Automobilbereich üblichen Temperaturen und Luftfeuchtigkeiten nicht stand.

Ein dritter Nachteil ist, dass Farbvarianten in der Beleuchtung immer zu einer Veränderung des OFN selbst führen. Das steht dem im Automobilbereich üblichen Wunsch entgegen, durch die Variation der Beleuchtungsfarbe und den Einsatz von Zierelementen unterschiedliche Fahrzeugklassen und Ausstattungslinien voneinander zu differenzieren und gleichzeitig die technischen Komponenten möglichst unverändert zu verwenden.

Mit der aufgeklebten Schnappscheibe können zudem die für die Fahrzeuganwendung notwendigen Betätigungskräfte und -wege nicht dargestellt werden, um eine unbeabsichtigte Betätigung in allen Fahrsituationen und unter den dabei möglicherweise auftretenden Vibrationen zu vermeiden, müssen im Fahrzeug die Betätigungskräfte höher und die Betätigungswege länger sein als in der consumer electronic. Diese bedingt wiederum eine gute Führung des OFN, die durch die geringen Bautiefen in der consumer electronic nicht möglich ist.

Die Aufgabe der vorliegenden Erfindung besteht somit darin, eine Bedieneinrichtung mit einem optischen Fingernavigationsmodul zum Einbau in ein Lenkrad eines Kraftfahrzeugs bereitzustellen, die den Anforderungen im Fahrzeugbau genügt.

Erfindungsgemäß wird diese Aufgabe gelöst durch eine Bedieneinrichtung nach Anspruch 1. Vorteilhaft Weiterbildungen der Erfindung ergeben sich aus den Unteransprüchen.

Es wird demnach eine Bedieneinrichtung zum Einbau in ein Lenkrad eines Kraftfahrzeugs mit einem Befestigungsrahmen und einem optischen Fingernavigationsmodul bereitgestellt. In dem Befestigungsrahmen ist ein erstes Lichtleitelement und das optische Fingernavigationsmodul durch ein Lichtabschottelement gehalten. Das Lichtabschottelement ist mittels einer Schnappverbindung an dem Befestigungsrahmen befestigt, und der Befestigungsrahmen weist mindestens ein Führungselement auf, mit dem eine Bewegung des Befestigungsrahmens führbar ist.

In vorteilhafter Weise werden also ein Befestigungsrahmen und ein Lichtabschottelement quasi als Gehäuse durch eine Schnappverbindung aneinander montiert und in ihrem Inneren ist dadurch das optische Fingernavigationsmodul und ein Lichtleitelement gehalten. Das Lichtabschottelement hat also eine zusätzliche Haltefunktion, wie sie für ein Gehäuse typisch ist. Darüber hinaus besitzt der Befestigungsrahmen auch ein Führungselement, an dem die Bedieneinrichtung bei einer Bewegung geführt werden kann. Damit besitzt der Befestigungsrahmen neben der Haltefunktion auch die Funktion der Bewegungsführung.

Erfindungsgemäß ist zwischen das optische Fingernavigationsmodul (OFN) und das Lichtabschottelement ein zweites Lichtleitelement eingefügt. Dies hat den Vorteil, dass das erste Lichtleitelement hinsichtlich der Lichtverteilung optimiert werden kann, während das zweite Lichtleitelement beispielsweise hinsichtlich der Farbe optimiert sein und leicht austauschbar gehalten werden kann.

Das erste Lichtleitelement und das zweite Lichtleitelement können jeweils ringförmig ausgebildet sein und das optische Fingernavigationsmodul umgeben. Durch eine hierdurch mögliche Ringbeleuchtung kann sich der Nutzer der Bedieneinrichtung leichter optisch orientieren und die Bedienfläche des optischen Fingernavigationsmoduls auffinden.

Vorteilhaft ist außerdem, wenn zwischen dem optischen Fingernavigationsmodul und dem Befestigungsrahmen ein gummielastisches Element angeordnet ist. Dieses auch als Weichkomponente bezeichenbare Element kann sowohl dem Toleranzausgleich als auch der Zugentlastung der elektrischen Anschlüsse des OFN dienen.

Speziell kann das gummielastische Element einen elektrischen Leiter, insbesondere einen Folienleiter, des optischen Fingernavigationsmoduls zur Zugentlastung an das erste Lichtleitelement drücken. Hierzu kann das gummielastische Element scheibenförmig und entsprechend konturiert ausgebildet sein.

Speziell kann eine Schaltvorrichtung zum Einbau in ein Lenkrad mit einer oben beschriebenen Bedieneinrichtung und mindestens einer weiteren Bedieneinrichtung bereitgestellt werden. Damit lassen sich Schalterblöcke, wie sie bei modernen Lenkrädern üblich sind, mit der erfindungsgemäßen Bedieneinrichtung realisieren.

Die Schaltvorrichtung kann mit einem Gehäuse ausgestattet sein, in das die Bedieneinrichtungen eingebaut sind und das ein zu dem Führungselement des Befestigungsrahmens korrespondierendes Führungselement zum Führen des Befestigungsrahmens in dem Gehäuse besitzt. Damit kann ein abgeschlossenes Modul bereitgestellt werden, das mit wenigen Handgriffen in ein Lenkrad einbaubar ist.

Darüber hinaus kann in dem Gehäuse mindestens eine Lichtquelle angeordnet sein, deren Licht über das erste und zweite Lichtleitelement an die Oberfläche der Bedieneinrichtung geleitet wird. Auf diese Weise ist also die Bedieneinrichtung selbst frei von Lichtquellen, und sie ist dennoch an ihrer Oberfläche beleuchtet.

Ferner kann an der dem optischen Fingernavigationsmodul abgewandten Seite des Befestigungsrahmens ein Schaltdom eines Schalters angeordnet sein, der durch eine Bewegung des Befestigungsrahmens betätigbar ist. Damit ist die Bedieneinrichtung mit dem optischen Fingernavigationsmodul gleichzeitig als Betätigungselement für einen Schalter nutzbar.

In einer weiteren Ausführungsform ist an der dem optischen Fingernavigationsmodul abgewandten Seite des Befestigungsrahmens eine Schaltmatte angeordnet, die den Leiter des optischen Fingernavigationsmoduls zur Zugentlastung gegen einen Abschnitt des Gehäuses drückt. Damit erhält die Schaltmatte, die typischerweise aus einem elastischen Material hergestellt ist (z. B. Silikon) zusätzlich die Funktion einer Zugentlastung.

Die vorliegende Erfindung wird nun anhand der beigefügten Zeichnungen näher erläutert, in denen zeigen:
- Fig. 1: eine Draufsicht auf ein OFN-Modul nach dem Stand der Technik;
- Fig. 2: eine Seitenansicht des OFN-Moduls von Fig. 1;
- Fig. 3: eine Skizze eines Lenkrads mit zwei OFN -Modulen;
- Fig. 4: eine erfindungsgemäße Bedieneinrichtung im zusammengebauten Zustand;
- Fig. 5: eine Explosionsdarstellung der Bedieneinrichtung von Fig. 4;
- Fig. 6: einen Schnitt durch einen in einen Schaltblock eingebaute Bedieneinrichtung und
- Fig. 7: ein um 90° gedrehter Schnitt durch die eingebaute Bedieneinrichtung von Fig. 6.

Die nachfolgend näher geschilderten Ausführungsbeispiele stellen bevorzugte Ausführungsformen der vorliegenden Erfindung dar.

In Fig. 3 ist schematisch ein Lenkrad 5 dargestellt. An dem Lenkrad befinden sich hier in ergonomisch passenden Positionen zwei Schalterblöcke 6, die auch als Multifunktionsschalter (MFS) bezeichnet werden können. In anderen Ausführungsbeispielen ist nur ein einziger derartiger Schalterblock oder mehr als zwei Schalterblöcke bzw. Multifunktionsschalter vorgesehen.

In dem Beispiel von Fig. 3 besitzt jeder Schalterblock 6 ein optisches Fingernavigationsmodul 1 (OFN). Darüber hinaus besitzen die Schalterblöcke 6 jeweils weitere mechanische Bedienelemente 7. Zur Übermittlung von Daten vom linken Schalterblock 6 zu einer Lenkradelektronik 8 (LRE) dient ein Kabel 9, das an seinen Enden jeweils mit Steckern ausgestattet ist. Analog hierzu erfolgt die Kommunikation von dem rechten Schalterblock 6 zu der Lenkradelektronik 8 über ein Kabel 9. der Signalausgang von der Lenkradelektronik 8 zu beispielsweise einem Mantelrohrschaltermodul (in Fig. 3 nicht dargestellt) erfolgt über ein weiteres Kabel 10.

Wie bereits eingangs erwähnt, dient jedes OFN 1 als Sensor für die Detektion von Fingerbewegungen. Die Kabel 9 dienen zur Realisierung einer Datenbusverbindung bzw. Kommunikationseinrichtung zwischen den OFN-Modulen 1 und der Lenkradelektronik 8.

Das OFN 1 soll z. B. mit einem Taster bzw. Schalter kombiniert werden und darüber hinaus, wie erwähnt, folgende Anforderungen erfüllen:
- homogene Ringbeleuchtung in verschiedenen Ausführungsformen
- mit einem Kurzhubtaster vergleichbare Betätigungshaptik
- engtolerierter Überstand des OFN zur umgebenden Schalterblende
- verschleißfreie Kontaktierung des OFN zur Leiterplatte und
- Fixierung des OFN ohne Kleben

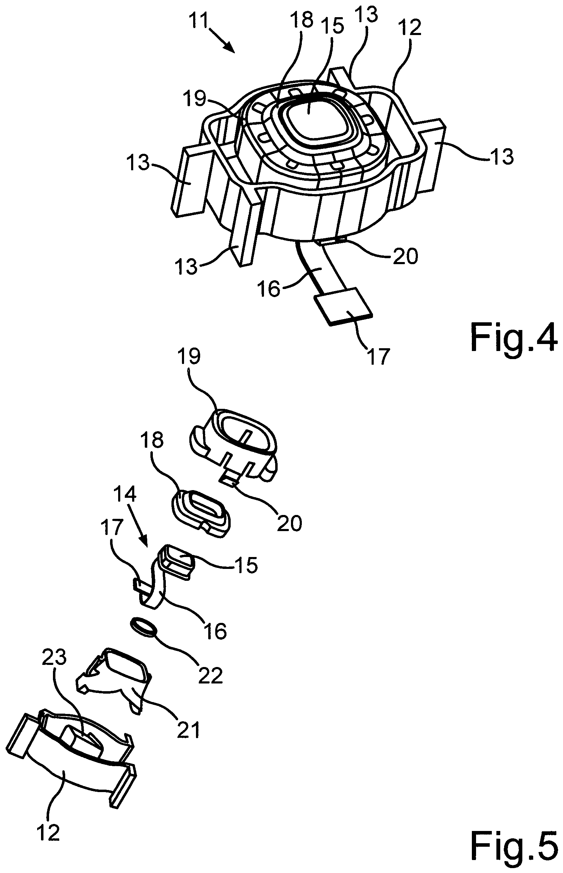

Kernstück zur Erfüllung dieser Anforderungen ist die im Zusammenhang mit den Fig. 4 und 5 erläuterte Bedieneinrichtung 11, die auch als OFN-Baugruppe bezeichnet werden kann. Wie aus Fig. 4 ersichtlich ist, besitzt die Bedieneinrichtung 11 als tragendes Grundelement einen Befestigungsrahmen 12. Dieser ist beispielsweise als Kunststoffspritzgussteil hergestellt. Er besitzt hier vier einteilig angeformte Finnen 13 als Führungselemente. Jede dieser Finnen 13 steht in einer anderen Richtung von dem Befestigungsrahmen 12 ab.

Im Inneren des Befestigungsrahmens 12 befindet sich das OFN-Modul 14 (vgl. Fig. 5), von dem in Fig. 4 lediglich die Bedienfläche 15, ein Folienleiter 16 und an dessen Ende ein Stecker 17 zu erkennen sind. Der Folienleiter 16 einschließlich Stecker 17 dienen zum elektrischen Anschluss des OFN-Moduls 14.

Im eingebauten Zustand ist die Bedienfläche 15 des OFN-Moduls (kurz OFN 14) von einem Ringlichtleiter 18 umgeben. Dieser Ringlichtleiter 18 kann in einer gewünschten Farbe hergestellt sein, so dass das durch ihn hindurch nach außen austretende Licht die entsprechende Färbung erhält.

Der Ringlichtleiter 18 wiederum ist von einem Lichtabschottelement 19 am Außenumfang umgeben. Dieses Lichtabschottelement 19 dient dazu, den Lichtaustrittsbereich des Ringlichtleiters 18 nach oben hin zu beschränken. Außerdem besitzt das Lichtabschottelement 19 die Funktion, einen Anschlag für den Ringlichtleiter 18 zu bilden, welcher seinerseits einen Anschlag für das OFN 14 bildet. Das OFN 14 und der Ringlichtleiter 18 werden also nach oben hin, wo der Befestigungsrahmen 12 offen ist, durch das Lichtabschottelement 19 gehalten.

In Fig. 4 ist außerdem das Ende eines Schnapphakens 20 zu erkennen, der einteilig mit dem Lichtabschottelement 19 gebildet ist und durch den Boden des Befestigungsrahmens 12 hindurchragt. Dieser Schnapphaken 20 wirkt mit dem Boden des Befestigungsrahmens 12 im Sinne einer Schnappverbindung zusammen. Zur Montage wird der Schnapphaken 20 des Lichtabschottelements 19 durch eine entsprechende Aussparung im Boden des Befestigungsrahmens 12 gedrückt. Dort schnappt er in üblicher Weise in seine Endposition und hintergreift dabei eine Kante des Befestigungsrahmens 12. Umgekehrt kann bei einer alternativen Ausführungsform auch der Schnapphaken einteilig an dem Befestigungsrahmen 12 angeformt sein und mit einem korrespondierenden Element des Lichtabschottelements 19 eine Schnappverbindung eingehen.

Wie aus Fig. 5 hervorgeht, besteht die OFN-Baugruppe bzw. die Bedieneinrichtung 11 neben dem Befestigungsrahmen 12, dem OFN 14, dem Ringleiter 18 und dem Lichtabschottelement 19 außerdem aus einem unteren Lichtleiter 21 und einem gummielastischen Element 22. Der untere Lichtleiter 21 (im vorliegenden Dokument auch erstes Lichtleitelement bezeichnet) wird bei der Montage in dem Befestigungsrahmen 12 gesteckt. In dem Boden des Befestigungsrahmens 12 sind eine oder mehrere Aussparungen vorgesehen, durch die hindurch Licht in den unteren Lichtleiter 21 dringt. Er transportiert das Licht zum Ringlichtleiter 18. Er besitzt hierzu ebenfalls ringförmige Gestalt und eine Wandhöhe, die in etwa der des topfförmigen Befestigungsrahmens 12 entspricht. Prinzipiell können der untere Lichtleiter (erstes Lichtleitelement) und der Ringlichtleiter 18 (zweites Lichtleitelement) auch einteilig gebildet sein.

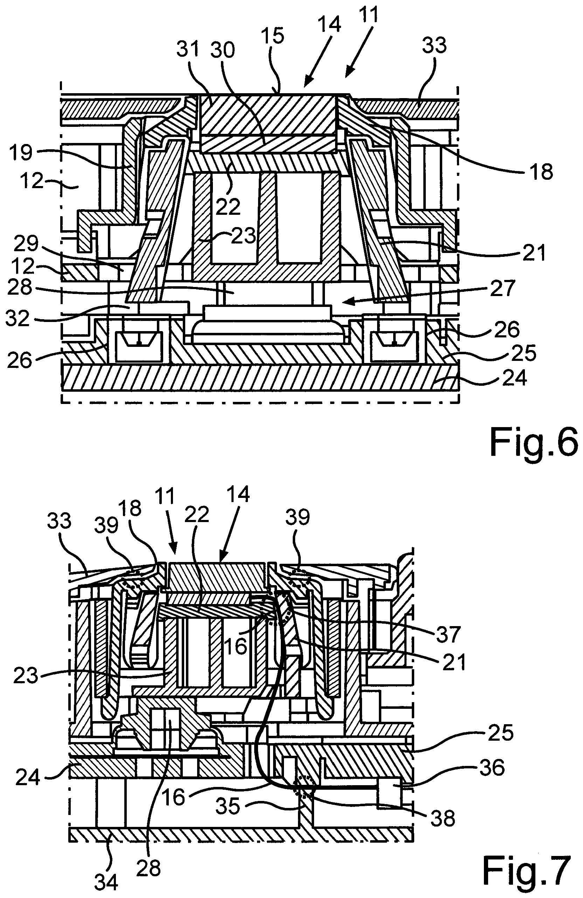

Wie aus Fig. 5 ersichtlich ist, besitzt der Befestigungsrahmen 12 in seinem Inneren eine Stützstruktur 23. Auf diese Stützstruktur, die ähnlich hoch ist wie die Wand des topfförmigen Befestigungsrahmens 12 wird bei der Montage das gummielastische Element 22 aufgelegt. Das gummielastische Element 22 wird dann im montierten Zustand von dem ringförmigen unteren Lichtleiter 21 umgeben. Das gummielastische Element 22, d. h. die Weichkomponente, ist vorzugsweise scheibenförmig ausgebildet und besitzt, wie im Zusammenhang mit Fig. 7 erläutert werden wird, ggf. spezielle Konturen, um neben dem Toleranzausgleich auch andere Funktionen wie Zugentlastung zu übernehmen. Dabei schützt das gummielastische Element 22 auch die Unterseite des OFN 14 vor Beschädigung.

Fig. 6 zeigt nun die Bedieneinrichtung 11 im in eine Schaltvorrichtung bzw. einen Schalterblock eingebauten Zustand in einem vertikalen Schnitt.

Auf dem Gehäuseboden (nicht dargestellt) der Schaltvorrichtung befindet sich eine Leiterplatte 24. Diese trägt hier eingebettet in eine Schaltermatte 25 zwei nach oben abstrahlende LEDs 26. Außerdem befindet sich ein Taster bzw. Schalter 27 auf der Leiterplatte 24. Unmittelbar über einem Schaltdom 28 des Schalters 27 befindet sich die Stützstruktur 23 des Befestigungsrahmens 12. Der konisch geformte, innen hohle untere Lichtleiter 21 umgibt die Stützstruktur 23 und ragt durch Aussparungen 29 im Boden 30 des Befestigungsrahmens 12 hindurch zu den LEDs 26.

Auf der Stützstruktur 23 liegt das scheibenförmige gummielastische Element 22 auf. Das gummielastische Element 22 fixiert ggf. den unteren Lichtleiter 21. Auf dem gummielastischen Element 22 liegt eine Leiterplatte 30 des OFN 14 auf. Darauf befindet sich der eigentliche Sensorabschnitt 31 des OFN 14 mit seiner Bedienfläche 15.

Der Sensorabschnitt 31 des OFN 14 ist am Außenumfang von dem Ringlichtleiter 18 umgeben. Letzterer ragt nach oben bis zur Bedienfläche 15 und nach unten bis zum unteren Lichtleitelement 21. Somit wird das Licht der LEDs 26 über den unteren Lichtleiter 21 nach oben zum Ringlichtleiter 18 und dort bis zur Oberfläche der Bedieneinrichtung 11 geführt. Ein Spalt 32 zwischen dem unteren Ende des unteren Lichtleiters 21 und einer der LEDs 26 ist dabei nicht schädlich. Dieser Spalt 32 ist notwendig, damit die Bedieneinrichtung 11 einschließlich OFN 14 und Befestigungsrahmen 12 den notwendigen Hub des Schalters 27 vollführen kann. Führungselemente des Gehäuses 24 zum Führen der Finnen 13 des Befestigungsrahmens 12 sind in Fig. 6 nicht zu erkennen.

Der Ringlichtleiter 18 und der untere Lichtleiter 21 sind außen von dem ebenfalls ringförmigen Lichtabschottelement 19 umgeben. Es verhindert, dass Licht von den Lichtleitern seitlich nach außen abgestrahlt wird. Außerdem hält es die gesamte OFN-Baugruppe zusammen.
An der Oberfläche befindet sich eine Schalterblende 33, deren Oberfläche im Niveau vorzugsweise etwas niedriger liegt als die Bedienfläche 15 im nichtbetätigten Zustand der Bedieneinrichtung 11. Dadurch kann der Fahrer die Bedieneinrichtung leicht ertasten.

In Fig. 7 ist die Anordnung von Fig. 6 in einem um 90 ° gedrehten Schnitt dargestellt. In dieser Ansicht ist auch ein Gehäuseboden 34 der Schaltvorrichtung zu erkennen. Senkrecht von dem Boden steht nach oben ein Steg 35 ab. An der Unterseite der Leiterplatte 24 ist ein Stecker 36 aufgesteckt, der zum Anschluss des Folienleiters 16 des OFN 14 dient. Der Folienleiter der OFN 14, der die elektrische Verbindung zwischen dem OFN und der Leiterplatte 24 herstellt, muss die relative Bewegung der Bedieneinrichtung bzw. des OFN 14 gegenüber der Leiterplatte 24 ermöglichen. Aus Bauraumgründen muss der Folienleiter 16 direkt am OFN 14 stark abgewinkelt werden, damit er innerhalb der Baugruppe nach unten zur Leiterplatte 24 und dem dort angeordneten Stecker 36 geführt werden kann. Insbesondere wird der Folienleiter 16 an der Innenseite des unteren Lichtleiters 21 vorbei zur Leiterplatte 24 geführt. Er verläuft dabei durch eine Aussparung der Leiterplatte 24 durch sie hindurch auf ihre Unterseite.

Um einen Verschleiß des Folienleiters 16 insbesondere im Bereich seiner Enden bzw. Kontaktstellen durch die Betätigung und Bewegung der gesamten OFN-Baugruppe, d. h. der Bedieneinrichtung 11 zu vermeiden, müssen Bewegungen des Folienleiters 16 am Abgang vom OFN 14 und am Stecker 36 auf der Leiterplatte 24 vermieden werden. Deshalb werden durch die Weichkomponente, d. h. das gummielastische Element 22 eine obere Zugentlastung (realisiert in dem gestrichelten Kreis 37) und durch die Schaltmatte 25 eine untere Zugentlastung (siehe gestrichelter Kreis 38) realisiert. Bei der oberen Zugentlastung 37 presst das gummielastische Element 22 den Folienleiter 16 gegen die Innenseite des unteren Lichtleiters 21. Bei der unteren Zugentlastung presst die Schaltmatte 25, die durch die Aussparung in der Leiterplatte 24 ragt, den Folienleiter 16 gegen den Steg 35 des Gehäuses des MFS, d. h. der Schaltvorrichtung. Die vorzugsweise aus elastischem Silikon gebildete Schaltmatte 25 hat also neben ihrer eigentlichen Funktion als Abdichtung der Schaltelemente die zusätzliche Funktion einer Zugentlastung.

Der bei der Montage auf das OFN 14 aufgesetzte Ringlichtleiter 18 ist ein für den Benutzer sichtbares und beleuchtetes Zierelement um das OFN 14. Der Ringlichtleiter 18 transportiert das Licht, wie erwähnt, vom unteren Lichtleiter 21 zur Oberfläche der OFN-Baugruppe. Gleichzeitig fixiert der Ringlichtleiter 18 das OFN 14 von oben und bildet den Anschlag (gestrichelter Kreis 39) der OFN-Baugruppe an der Blende 33 des MFS (Multifunktionsschalter), also der Schaltvorrichtung.

Wichtig für die Bedienbarkeit des OFN 14 im Lenkrad 5 ist ein genau eingestellter Überstand des OFN 14 gegenüber der Blende 33 des MFS. Da im Gegensatz zur consumer electronic ohne Blickabwendung bedient werden soll, muss die Position des OFN im Lenkrad vom Fahrer erfühlbar sein. Dafür ist ein gewisser Überstand des OFN gegenüber der Blende 33 erforderlich, was bereits in Zusammenhang mit Fig. 6 angesprochen wurde. Auf der anderen Seite darf der Überstand auch nicht zu groß sein, weil sonst die Wischbewegung des Fingers über die OFN-Bedienfläche 15 behindert wird. Der Überstand des OFN 14 zur Blende 33 wird neben der Sollvorgabe auch von den Toleranzen der Bauteile bestimmt, die die Toleranzkette vom OFN 14 bis zur Blende 33 bilden. Indem der Ringlichtleiter 18 auf das OFN 14 aufgesetzt wird und gleichzeitig die Anschläge zur Blende 33 bildet, besteht die Toleranzkette mit dem OFN 14, dem Ringlichtleiter 18 und der Blende 33 aus lediglich drei Teilen. Damit ist die Toleranzkette so kurz wie möglich und der Überstand des OFN 14 zur Blende 33 kann eng toleriert werden.

Die erfindungsgemäße Bedieneinrichtung, mit der die entsprechende Schaltvorrichtung hergestellt werden kann, hat zusammenfassend u. a. den Vorteil, dass sie allein durch Stecken und Clipsen montiert werden kann. Ein Klebeprozess ist also nicht notwendig. Der Ringlichtleiter 18 ist als separates Element ausgeführt und seine Oberfläche sowie seine Farbgebung kann ohne Rückwirkung auf die anderen Elemente variiert werden. Beispielsweise kann der Ringlichtleiter als kostengünstiges Spritzteil ohne weitere Oberflächenbehandlung oder als anspruchsvolles Zierteil in transluzenter Chromoptik ausgeführt werden.

Die Ausleuchtung der Bedienvorrichtung ist durch die vorhandenen Lauflängen des Lichts und die Streuwirkung der Lichtleiter homogen. Der untere Lichtleiter ist zur Realisierung der homogenen Lichtverteilung geometrisch entsprechend geformt. Die auf der Leiterplatte angeordneten Lichtquellen können ohne Rückwirkungen auf das OFN verändert werden, was einen weiteren Vorteil darstellt.

Vorteilhaft ist außerdem, dass die den Überstand des OFN zur umgebenden Schalterblende bestimmende Toleranzkette sehr kurz ist. Damit kann das entsprechende, für die Bedienbarkeit wichtige Maß eng toleriert werden.
Einen weiteren Vorteil der Bedieneinrichtung stellt das gummielastische Element dar, das Fertigungstoleranzen ausgleicht und den Folienleiter des OFN fixiert. Damit ist zumindest im oberen Bereich der Bedieneinrichtung ein Verschleiß an Biege- und Kontaktstellen des Folienleiters ausgeschlossen. Auch die untere Zugbelastung des Folienleiters durch die Schaltmatte zählt zu den wichtigsten Vorteilen des oben geschilderten Ausführungsbeispiels.

Da der Befestigungsrahmen eine geeignete Höhe (z. B. wenige Millimeter) besitzt, ist in Bewegungsrichtung eine ausreichende Führung der Bedieneinrichtung möglich, wodurch eine hochwertige Haptik realisiert werden kann.

## Patentansprüche

1. Bedieneinrichtung (11) zum Einbau in ein Lenkrad eines Kraftfahrzeugs mit
- einem Befestigungsrahmen (12) und
- einem Lichtabschottelement (19) das mittels einer Schnappverbindung an dem Befestigungsrahmen (12) befestigt ist,
**dadurch gekennzeichnet, dass**
- der Befestigungsrahmen (12) mindestens ein Führungselement (13) aufweist, mit dem eine Bewegung der den Befestigungsrahmen (12) umfassenden Bedieneinrichtung (11) führbar ist,
- die Bedieneinrichtung (11) ein optisches Fingernavigationsmodul (14) umfasst und
- in dem Befestigungsrahmen (12) ein erstes Lichtleitelement (21) und das optische Fingernavigationsmodul (14) durch das Lichtabschottelement (19) gehalten sind, wobei zwischen das optische Fingernavigationsmodul (14) und das Lichtabschottelement (19) ein zweites Lichtleitelement (18) eingefügt ist.

2. Bedieneinrichtung (11) nach Anspruch 1,
**dadurch gekennzeichnet, dass**
das erste Lichtleitelement (21) und das zweite Lichtleitelement (18) jeweils ringförmig ausgebildet sind und das optische Fingernavigationsmodul (14) umgeben.

3. Bedieneinrichtung (11) nach einem der vorhergehenden Ansprüche,
**dadurch gekennzeichnet, dass**
zwischen dem optischen Fingernavigationsmodul (14) und dem Befestigungsrahmen (12) ein gummielastisches Element (22) angeordnet ist.

4. Bedieneinrichtung (11) nach Anspruch 3,
**dadurch gekennzeichnet, dass**
das gummielastische Element (22) einen elektrischen Leiter, insbesondere einen Folienleiter (16), des optischen Fingernavigationsmoduls (14) zur Zugentlastung an das erste Lichtleitelement (21) drückt.

5. Schaltvorrichtung zum Einbau in ein Lenkrad mit einer Bedieneinrichtung (11) nach einem der vorhergehenden Ansprüche und mindestens einer weiteren Bedieneinrichtung (7).

6. Schaltvorrichtung nach Anspruch 5,
**dadurch gekennzeichnet, dass**
sie mit einem Gehäuse ausgestattet ist, in das die Bedieneinrichtungen (11, 7) eingebaut
sind und das ein zu dem Führungselement (13) des Befestigungsrahmens (12) korrespondierendes Führungselement zum Führen des Befestigungsrahmens in dem Gehäuse besitzt.

7. Schaltvorrichtung nach Anspruch 5 oder 6 und mit der Bedieneinrichtung (11) nach Anspruch 2,
**dadurch gekennzeichnet, dass**
in dem Gehäuse mindestens eine Lichtquelle (26) angeordnet ist, deren Licht über das erste und zweite Lichtleitelement (21, 18) an die Oberfläche der Bedieneinrichtung (11) geleitet wird.

8. Schaltvorrichtung nach einem der Ansprüche 5 bis 7,
**dadurch gekennzeichnet, dass**
an der dem optischen Fingernavigationsmodul (14) abgewandten Seite des Befestigungsrahmens (12) ein Schaltdom (32) eines Schalters angeordnet ist, der durch eine Bewegung des Befestigungsrahmens (12) betätigbar ist.

9. Schaltvorrichtung nach einem der Ansprüche 6 bis 8,
mit der Bedieneinrichtung (11) nach Anspruch 4,
**dadurch gekennzeichnet, dass**
an der dem optischen Fingernavigationsmodul (14) abgewandten Seite des Befestigungsrahmens (12) eine Schaltmatte (25) angeordnet ist, die den elektrischen Leiter des
optischen Fingernavigationsmoduls (14) zur Zugentlastung gegen einen Abschnitt des Gehäuses (34) drückt.

## Claims

1. Operating device (11) for installation into a steering wheel of a motor vehicle, comprising
- a mounting frame (12) and
- a light sealing-off element (19) secured to the mounting frame (12) by means of a snap connection,
**characterised in that**
- the mounting frame (12) comprises at least one guide element (13), by means of which a movement of the operating device (11) comprising the mounting frame (12) can be guided,
- the operating device (11) comprises an optical finger navigation module (14), and
- a first light guiding element (21) and the optical finger navigation module (14) are held in the mounting frame (12) by the light sealing-off element (19), wherein a second light guiding element (18) is installed between the optical finger navigation module (14) and the light sealing-off element (19).

2. Operating device (11) according to claim 1,
**characterised in that**
the first light guiding element (21) and the second light guiding element (18) are both annular in design and surround the optical finger navigation module (14).

3. Operating device (11) according to any of the preceding claims,
**characterised in that**
a rubber-elastic element (22) is placed between the optical finger navigation module (14) and the mounting frame (12).

4. Operating device (11) according to claim 3,
**characterised in that**
the rubber-elastic element (22) presses an electric conductor, in particular a foil conductor (16), of the optical finger navigation module (14) against the first light guiding element (21) for tension relief.

5. Switching device for installation into a steering wheel with an operating device (11) according to any of the preceding claims and with at least one further operating device (7).

6. Switching device according to claim 5,
**characterised in that**
it is equipped with a housing into which the operating devices (11, 7) are installed and which has a guiding element corresponding to the guiding element (13) of the mounting frame (12) for guiding the mounting frame in the housing.

7. Switching device according to claim 5 or 6 and with the operating device (11) according to claim 2,
**characterised in that**
at least one light source (26), the light of which is guided to the surface of the operating device (11) via the first and the second light guiding element (21, 18), is located in the housing.

8. Switching device according to any of claims 5 to 7,
**characterised in that**
on the side of the mounting frame (12) which is remote from the optical finger navigation module (14), a switching pin (32) of a switch actuable by a movement of the mounting frame (12) is located.

9. Switching device according to any of claims 6 to 8 with the operating device (11) according to claim 4,
**characterised in that**
on the side of the mounting frame (12) which is remote from the optical finger navigation module (14), a switching mat (25), which presses the electric conductor of the optical finger navigation module (14) against a section of the housing (34) for tension relief, is located.

## Revendications

1. Dispositif de commande (11) destiné à être monté dans un volant de direction d'un véhicule automobile comprenant
- un cadre de fixation (12) et
- un élément de cloisonnement de lumière (19) qui est fixé au moyen d'une liaison par encliquetage sur le cadre de fixation (12), **caractérisé en ce que** le cadre de fixation (12) comprend au moins un élément de guidage (13) qui permet de guider un mouvement du dispositif de commande (11) comprenant le cadre de fixation (12),
- le dispositif de commande (11) comprend un module de navigation à un doigt (14) optique et
- dans le cadre de fixation (12) un premier élément guide lumière (21) et le module de navigation au doigt (14) optique sont retenus par l'élément de cloisonnement de lumière (19), entre le module de navigation à un doigt (14) optique et l'élément de cloisonnement de lumière (19) est inséré un second élément guide lumière (18).

2. Dispositif de commande (11) selon la revendication 1, **caractérisé en ce que** le premier élément guide lumière (21) et le second élément guide lumière (18) sont chacun conçus sous la forme d'un anneau et entourent le module de navigation à un doigt (14) optique.

3. Dispositif de commande (11) selon l'une quelconque des revendications précédentes, **caractérisé en ce qu'**entre le module de navigation à un doigt (14) optique et le cadre de fixation (12) est disposé un élément en caoutchouc élastique (22).

4. Dispositif de commande (11) selon la revendication 3, **caractérisé en ce que** l'élément en caoutchouc élastique (22) enfonce un conducteur électrique, notamment un conducteur plat (16) du module de navigation à un doigt (14) optique pour réaliser un soulagement de traction au niveau du premier élément guide lumière (21).

5. Dispositif de commutation destiné à être monté dans un volant de direction comprenant un dispositif de commande (11) selon l'une quelconque des revendications précédentes et au moins un autre dispositif de commande (7).

6. Dispositif de commutation selon la revendication 5, **caractérisé en ce qu'**il est doté d'un boîtier dans lequel est installé les dispositifs de commande (11, 7) et possède l'élément de guidage correspondant qui guide vers l'élément de guidage (13) du cadre de fixation (12) dans le boîtier.

7. Dispositif de commutation selon la revendication 5 ou la revendication 6 et comprenant le dispositif de commande (11) selon la revendication 2, **caractérisé en ce que** dans le boîtier est disposée au moins une source de lumière (26) dont la lumière est guidée par le premier et le second élément guide lumière (21, 18) sur la surface du dispositif de commande (11).

8. Dispositif de commutation selon l'une quelconque des revendications 5 à 7, **caractérisé en ce que** sur la face opposée au module de navigation à un doigt (14) optique du cadre de fixation (12) est disposé un dôme de commutation (32) du commutateur qui peut être actionné par un mouvement du cadre de fixation (12).

9. Dispositif de commutation selon l'une quelconque des revendications 6 à 8, comprenant le dispositif de commande (11) selon la revendication 4, **caractérisé en ce que** sur la face opposée au module de navigation à un doigt (14) optique du cadre de fixation (12) est disposé un tapis sensible (25) qui enfonce le conducteur électrique du module de navigation à un doigt (14) optique pour réaliser un soulagement de traction contre une partie du boîtier (34).
